(19) Europäisches Patentamt
European Patent Office
Office européen des brevets

(11) **EP 4 376 328 A1**

(12) **EUROPEAN PATENT APPLICATION**
published in accordance with Art. 153(4) EPC

(43) Date of publication:
**29.05.2024 Bulletin 2024/22**

(21) Application number: **22869872.6**

(22) Date of filing: **07.09.2022**

(51) International Patent Classification (IPC):
**H04B 17/30** (2015.01)    **H04W 16/18** (2009.01)

(52) Cooperative Patent Classification (CPC):
**H04B 17/30; H04W 16/18**

(86) International application number:
**PCT/JP2022/033583**

(87) International publication number:
**WO 2023/042725 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.09.2021   JP 2021151196**

(71) Applicant: **NEC Corporation
108-8001 Tokyo (JP)**

(72) Inventor: **YOKOTA Nobuyuki
Tokyo 108-8001 (JP)**

(74) Representative: **Vossius & Partner
Patentanwälte Rechtsanwälte mbB
Siebertstraße 3
81675 München (DE)**

(54) **LINE DESIGN ASSISTING DEVICE, PROCESSING METHOD, AND RECORDING MEDIUM**

(57)   A line design assisting device calculates an estimated value of a propagation loss L using a propagation loss calculation formula, aerial line coupling loss formulas of a plurality of techniques, and a situation-specific parameter. The line design assisting device specifies the propagation loss formula and the atmospheric structure parameter M used in that propagation loss formula such that the estimated value of the propagation loss L approached the actual measured value of the propagation loss, on the basis of the relationship between the actual measured value of the propagation loss recorded on the basis of the transmission and reception of radio waves between the transmission-side and reception-side antennas and the estimated value of the propagation loss. The line design assisting device records the propagation loss calculation formula and atmospheric structure parameter specified by a learning portion for each combination of a plurality of different transmission-side and reception-side antenna installation locations.

FIG. 1

**Description**

TECHNICAL FIELD

The present disclosure relates to a line design assisting device, a processing method, and a recording medium used to assist in line design between antennas.

BACKGROUND ART

There is a technology for out-of-sight radio communication between a transmitting point and a receiving point separated by mountainous terrain, and the like, where direct waves cannot reach. In such a technology, the orientation of the transmission-side antenna at the transmitting point and the reception-side antenna at the receiving point is aligned, with each antenna being directed towards the top of the mountainous area. The transmission-side and reception-side antennas used for such radio communications have large antenna diameters and use high-power power amplification devices. Over-the-horizon (OH) communication is sometimes used to refer to out-of-sight radio communications.
Related technology is disclosed in Patent Document 1. Patent Document 1 discloses a technique for estimating radio propagation loss at difficult-to-measure reception heights in an out-of-sight environment.

Prior Art Documents

Patent Document

Patent Document 1: Japanese Unexamined Patent Application, First Publication No. 2014-045285

SUMMARY OF THE INVENTIONS

Problems to be Solved by the Invention

In line design work that requires understanding of propagation loss, etc. in the radio communication path between the installation location of the transmission-side antenna and the installation location of the reception-side antenna, where OH communication takes place, it is necessary to assume the propagation loss, identify the calculation formula to calculate the propagation loss, and identify the parameters to be used in that calculation formula.
In the circuit design work technique described above, there is a need for techniques to assist in more easily specifying the propagation loss in the radio communication path between the installation location of the transmission-side antenna and the installation location of the reception-side antenna, the calculation formula to calculate that propagation loss, and the parameters used in that calculation formula.
An example of an object of the present disclosure is to provide a line design assisting device, a processing method, and a recording medium that solve the above-mentioned problems.

Means for Solving the Problem

According to the first example aspect of the present disclosure, a line design assisting device includes: an acquisition means that acquires a propagation loss calculation formula that calculates a propagation loss L of a radio communication path using at least an atmospheric structure parameter M corresponding to the region of the radio communication path between an installation location of the transmission-side antenna and the installation location of the reception-side antenna, a frequency f of the radio waves transmitted and received by the transmission-side antenna and the reception-side antenna, a propagation loss Ln of the radio waves in a radio wave scattering space of the troposphere in that radio communication path, an aerial line coupling loss Lc of the radio communication path, a transmission-side antenna gain Gt, and a reception-side antenna gain Gr, aerial line coupling loss calculation formulas of a plurality of different techniques used for calculation of the aerial line coupling loss Lc, terrain data in the radio communication path, and a situation-specific parameter used for at least one of the propagation loss calculation formula and the aerial line coupling loss calculation formulas; an estimated value calculation means that calculates an estimated value of the propagation loss L using the propagation loss calculation formula, the aerial line coupling loss calculation formulas of a plurality of different techniques, and the situation-specific parameter; a learning means that specifies the propagation loss calculation formula using any of the plurality of aerial line coupling loss calculation formulas, and specifies the atmospheric structure parameter M used in that propagation loss calculation formula such that the estimated value of the propagation loss L approaches the actual measured value of the propagation loss, on the basis of the relationship between the actual measured value of propagation loss recorded based on the transmission and reception of the radio waves between the transmission-side and reception-side antennas, and the estimated value of the propagation loss L; and a recording means that records the propagation loss calculation formula and the atmospheric structure parameter specified by the learning means for each of a plurality of different combinations of the transmission-side antenna installation location and the reception-side antenna installation location.

According to the second example aspect of the present disclosure, a processing method acquires a propagation loss calculation formula that calculates a propagation loss L of a radio communication path using at least an atmospheric structure parameter M corresponding to the region of the radio communication path between an installation location of the transmission-side antenna and the installation location of the reception-side antenna, a frequency f of the radio waves transmitted and received by the transmission-side antenna and the reception-side antenna, a propagation loss Ln of the radio waves in a radio wave scattering space of the troposphere in that radio communication path, an aerial line coupling loss Lc of the radio communication path, a transmission-side antenna gain Gt, and a reception-side antenna gain Gr, aerial line coupling loss calculation formulas of a plurality of different techniques used for calculation of the aerial line coupling loss Lc, terrain data in the radio communication path, and a situation-specific parameter used for at least one of the propagation loss calculation formula and the aerial line coupling loss calculation formulas; calculates an estimated value of the propagation loss L using the propagation loss calculation formula, the aerial line coupling loss calculation formulas of a plurality of different techniques, and the situation-specific parameter; specifies the propagation loss calculation formula using any of the plurality of aerial line coupling loss calculation formulas, and specifies the atmospheric structure parameter M used in that propagation loss calculation formula such that the estimated value of the propagation loss L approaches the actual measured value of the propagation loss, on the basis of the relationship between the actual measured value of propagation loss recorded based on the transmission and reception of the radio waves between the transmission-side and reception-side antennas, and the estimated value of the propagation loss L; and records the propagation loss calculation formula and the atmospheric structure parameter specified by the learning means for each of a plurality of different combinations of the transmission-side antenna installation location and the reception-side antenna installation location.

According to the third example aspect of the present disclosure, a recording medium stores a program for causing a computer of a line design assisting device to acquire a propagation loss calculation formula that calculates a propagation loss L of a radio communication path using at least an atmospheric structure parameter M corresponding to the region of the radio communication path between an installation location of the transmission-side antenna and the installation location of the reception-side antenna, a frequency f of the radio waves transmitted and received by the transmission-side antenna and the reception-side antenna, a propagation loss Ln of the radio waves in a radio wave scattering space of the troposphere in that radio communication path, an aerial line coupling loss Lc of the radio communication path, a transmission-side antenna gain Gt, and a reception-side antenna gain Gr, aerial line coupling loss calculation formulas of a plurality of different techniques used for calculation of the aerial line coupling loss Lc, terrain data in the radio communication path, and a situation-specific parameter used for at least one of the propagation loss calculation formula and the aerial line coupling loss calculation formulas; calculate an estimated value of the propagation loss L using the propagation loss calculation formula, the aerial line coupling loss calculation formulas of a plurality of different techniques, and the situation-specific parameter; specify the propagation loss calculation formula using any of the plurality of aerial line coupling loss calculation formulas, and specify the atmospheric structure parameter M used in that propagation loss calculation formula such that the estimated value of the propagation loss L approaches the actual measured value of the propagation loss, on the basis of the relationship between the actual measured value of propagation loss recorded based on the transmission and reception of the radio waves between the transmission-side and reception-side antennas, and the estimated value of the propagation loss L; and record the propagation loss calculation formula and the atmospheric structure parameter specified by the learning means for each of a plurality of different combinations of the transmission-side antenna installation location and the reception-side antenna installation location.

Effect of Invention

According to the present disclosure, it is possible to assist in order to more easily assume a propagation loss in a radio communication path between the installation location of the transmission-side antenna and the installation location of the reception-side antenna, specify the calculation formula for calculating such propagation loss, and specify the parameters to be used in that calculation formula.

BRIEF DESCRIPTION OF THE DRAWINGS

[FIG. 1] FIG. 1 is a diagram showing a configuration of a radio communication system in which the line design assisting device according to the present example embodiment assists in line design.

[FIG. 2] FIG. 2 is a hardware configuration diagram of the line design assisting device according to the present example embodiment.

[FIG. 3] FIG. 3 is a functional block diagram of the line design assisting device according to the present example embodiment.

[FIG. 4] FIG. 4 is a diagram showing an overview of the processing of the line design assisting device according to the present example embodiment.

[FIG. 5] FIG. 5 is a diagram showing the processing flow of the line design assisting device according to the present example embodiment.

[FIG. 6] FIG. 6 is a diagram showing an example of the configuration of the line design assisting device according to the present example embodiment.

[FIG. 7] FIG. 7 is a diagram showing the processing flow by the line design assisting device shown in FIG. 6.

EXAMPLE EMBODIMENT

The following is a description of a line design assisting device for radio communication systems according to one example embodiment of the present disclosure, with reference to the drawings.

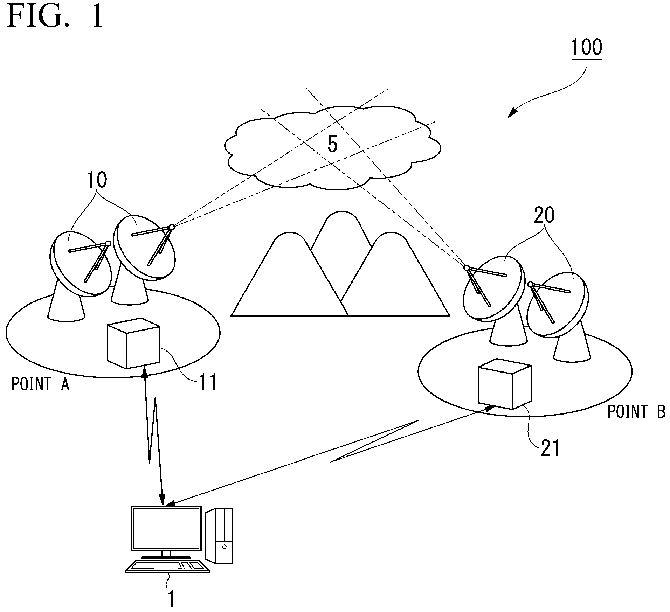

FIG. 1 is a drawing showing a configuration of a radio communication system in which the line design assisting device according to the present example embodiment assists in line design.

As shown in FIG. 1, a radio communication system 100 has radio communication facilities consisting of antennas and radio control devices at points A and B, respectively, which are separated by mountainous terrain and the like or which radio waves do not directly reach. The first radio facility at point A is equipped with an antenna 10 and a radio control device 11. The second radio facility at point B is equipped with an antenna 20 and a radio control device 21. The line design assisting device 1 may be communicatively connected to the radio control device 11 and the radio control device 21.

Transmitted radio waves from one of the antennas 10 and 20 diffract around obstacles such as mountainous terrain, reflect off obstacles, or scatter in the troposphere, and are then received by the other antenna. This allows OH communication, which is radio communication with no line-of-sight between the antenna 10 and the antenna 20. The radio control device 11 may control the amplification and output power of the signal at the antenna 10, the direction of transmission of the transmitted radio waves, and so on. The line design assisting device 1 is a computer device provided to assist in line design according to the desired installation location of the antenna 10 and antenna 20. Specifically, for each combination of several different transmission-side antenna locations and reception-side antenna locations, the line design assisting device 1 specifies the appropriate propagation loss calculation formula for calculating the propagation loss between the antennas of that combination and the atmospheric structure parameter used in that formula, and records them. This process allows the line design assisting device 1 to calculate the propagation loss between antennas at any given installation location and record the information for use in line design.

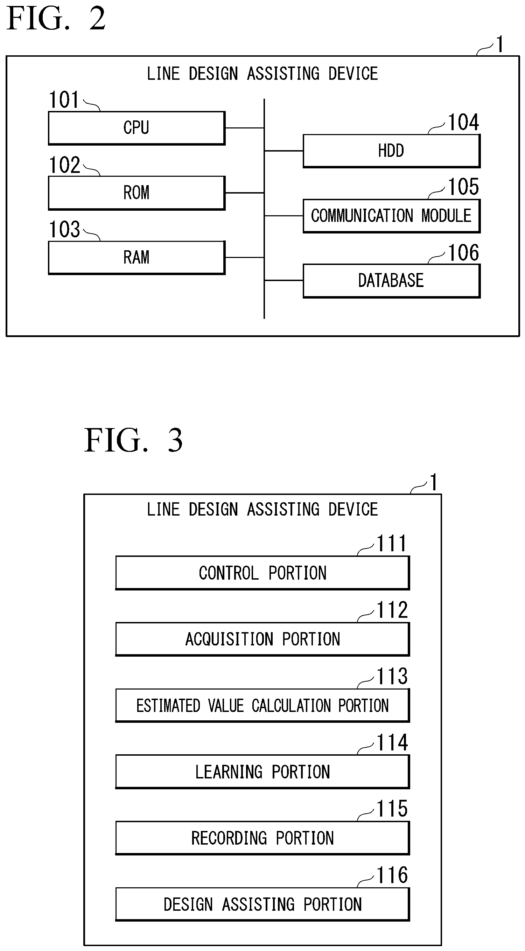

FIG. 2 is a hardware configuration diagram of the line design assisting device according to the present example embodiment.

As FIG. 2 shows, the line design assisting device 1 is a computer equipped with hardware such as a CPU (Central Processing Unit) 101, ROM (Read Only Memory) 102, RAM (Random Access Memory) 103, HDD (Hard Disk Drive) 104, communication module 105, database 106, and other hardware. The radio control device 11 and the radio control device 12 may have similar hardware configurations.

FIG. 3 is a functional block diagram of the line design assisting device according to the present example embodiment.

The line design assisting device 1 executes a processing program. As a result, the line design assisting device 1 is equipped with the functions of a control portion 111, acquisition portion 112, estimated value calculation portion 113, a learning portion 114, a recording portion 115, and a design assisting portion 116.

The acquisition portion 112 acquires various pieces of data for processing by the line design assisting device 1. For example, the acquisition portion 112 acquires a propagation loss calculation formula that calculates the propagation loss L of the radio communication path using at least an atmospheric structure parameter M, a frequency f, a propagation loss Ln, an aerial line coupling loss Lc of the radio communication path, a transmission-side antenna gain Gt, and a reception-side antenna gain Gr. The atmospheric structure parameter M corresponds to the region of the radio communication path between the location of the transmission-side antenna and the location of the reception-side antenna. The frequency f is the frequency of the radio waves transmitted and received by the transmission-side antenna and the reception-side antenna. The propagation loss Ln is the propagation loss of the radio waves in a tropospheric radio scattering space 5 along the radio communication path. The acquisition portion 112 is used to calculate the aerial line coupling loss Lc, and acquires a plurality of aerial line coupling loss calculation formulas respectively corresponding to multiple different techniques. The acquisition portion 112 acquires the topographical data in the radio communication path and the situation-specific parameter to be used in at least one of the propagation loss calculation formula or the aerial line coupling loss calculation formula. The acquisition portion 112 may acquire other data. The situation-specific parameter is a parameter used in at least one of the propagation loss calculation formula or the aerial line coupling loss calculation formula, with one example being the atmospheric structure parameter M, which serves as a value influencing changes in the radio communication situation. Although topographic data and the situation-specific parameter are described as different information in the present example embodiment, the topographic data information may be included in the definition of the situation-specific parameter.

The estimated value calculation portion 113 calculates an estimated value of the propagation loss L using the propagation loss calculation formula, the multiple aerial line coupling loss formulas respectively corresponding to the multiple different methods, and the situation-specific parameter.

The learning portion 114 uses machine learning to specify a propagation loss calculation formula using any of the plurality of aerial line coupling loss calculation formulas, and to specify the atmospheric structure parameter M used in that propagation loss calculation formula such that the estimated value of the propagation loss L approaches the actual measured value of propagation loss, on the basis of the relationship between the actual measured value of the propagation loss recorded in the past on the basis of the transmission and reception of radio waves between the transmission-side and reception-side antennas and the estimated value of the propagation loss.

The recording portion 115 records the propagation loss calculation formula and atmospheric structure parameter specified by the learning means for each combination of several different transmission-side and reception-side antenna installation locations.

As shown in FIG. 1, the line design assisting device 1 records data for line design assistance in OH communications. Line design in OH communication requires estimating the propagation loss L in the radio communication path between the location of the transmission-side antenna and the location of the reception-side antenna. It is also necessary to specify the appropriate formula to calculate this propagation loss L and to specify the atmospheric structure parameter M. The atmospheric structure parameter M is a value given for each climatic region on earth, defined by a classification such as Climate-1, Climate-2, Climate-3, Climate-4, Climate-5, Climate-6, Climate-7a, Climate-7b, Climate-8, and so on, with this value affecting the refractive index of radio waves in the air. For example, Climate-1 is defined as tropical to 10 degrees latitude. Climate-2 is defined as continental subtropics from 10 to 20 degrees latitude. Climate-3 is defined as the marine subtropics from 10 to 20 degrees latitude. Climate-4 is defined as deserts between 20 and 30 degrees latitude. Climate-5 is defined as areas bordering deserts between 3 and 40 degrees latitude. Climate-6 is defined as a continental temperate zone between 30 and 60 degrees latitude. Climate-7a is defined as an oceanic temperate onshore region between 30 and 60 degrees. Climate-7b is defined as an oceanic temperate maritime region between 30 and 60 degrees latitude. Climate-8 is defined as a polar region with a latitude of 60 degrees or more. The aforementioned definition of the atmospheric structure parameter M is based on the CCIR standards, with other standards such as ITU-R using different definitions. In the propagation loss calculation formula, the atmospheric structure parameter M according to the climatic region can be used to calculate the propagation loss L, which takes into account the influence of radio wave scattering according to the climatic region. It is known that tropospheric scattering of radio waves generally occurs at altitudes up to approximately 15 km, so it is necessary to calculate the propagation loss L by taking this tropospheric scattering into account.

In line design, it is also necessary to specify an appropriate formula for calculating propagation loss based on the season. The line design assisting device 1 identifies a formula for estimating the propagation loss L in the radio communication path between any transmission-side antenna installation location and reception-side antenna installation location, as well as the atmospheric structure parameter M, and records them for each combination of that transmission-side antenna installation location and reception-side antenna installation location.

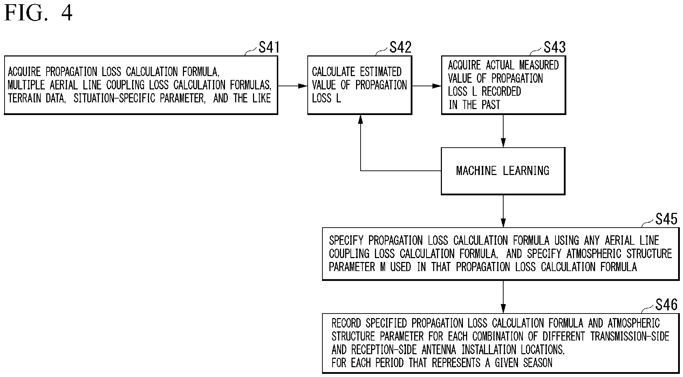

FIG. 4 is a diagram that shows an overview of the processing of the line design assisting device.

The line design assisting device 1 acquires the propagation loss calculation formula, the different multiple aerial line coupling loss calculation formulas used for calculating the aerial line coupling loss Lc used in the propagation loss calculation formula, terrain data, the situation-specific parameter, and the like (Step S41). The line design assisting device 1 calculates the estimated value of the propagation loss L using the propagation loss calculation formula, the multiple aerial line coupling loss formulas, and the situation-specific parameter (Step S42). The line design assisting device 1 acquires the actual measured value of the propagation loss L recorded in the past based on transmission and reception of the radio waves between the transmission-side and reception-side antennas (Step S43). Based on the relationship between the actual measured value of the propagation loss recorded on the basis of the transmitted and received radio waves between the transmission-side and reception-side antennas and the estimated value of the propagation loss L, the line design assisting device 1 uses machine learning to specify a propagation loss calculation formula using any of a plurality of aerial line coupling loss calculation formulas, and to specify the atmospheric structure parameter M used in that propagation loss calculation formula in order that the estimated value of the propagation loss L approaches the measured value of propagation loss (Step S44). The line design assisting device 1 may identify other parameters by machine learning.

Based on the relationship between the actual measured value of the propagation loss recorded on the basis of the transmitted and received radio waves between the transmission-side and reception-side antennas and the estimated value of the propagation loss L, the line design assisting device 1, for each period of time representing a given season (a given period of time), may use machine learning to specify a propagation loss calculation formula using any of a plurality of aerial line coupling loss calculation formulas, and to specify the atmospheric structure parameter M used in that propagation loss calculation formula such that the estimated value of the propagation loss L approaches the measured value of the propagation loss.

The line design assisting device 1, for each period that represents a given season, records the specified propagation loss calculation formula and atmospheric structure parameter for each combination of several different transmission-side and reception-side antenna installation locations (Step S45).

The propagation loss calculation formula is a propagation loss calculation formula that calculates a predetermined statistical value of propagation loss that varies over a long period of time. Specifically, the propagation loss calculation formula is a formula to calculate the annual median value (propagation loss L (50%)), which is a predetermined statistical value of propagation loss that varies over a long period of time, as an example. The line design assisting device 1 may use machine learning to specify a propagation loss calculation formula that calculates the annual median L (propagation loss L (50%)) of the propagation loss that varies over a long period of time, and to specify the atmospheric structure parameter M used in the propagation loss calculation formula. Alternatively, the line design assisting device 1 may use machine learning to specify the propagation loss calculation formula that calculates the propagation loss L (99.9%) and specify the atmospheric structure parameter M used in the propagation loss calculation formula, being as an example a formula calculating the propagation loss L (99.9%) when the annual line quality is 99.9%, which is a predetermined statistical value of the propagation loss that varies over a long period of time.

Formula (1) below is a propagation loss calculation formula that calculates the annual median L (propagation loss L (50%)) of the propagation loss that varies over long periods.

[Formula 1]

$$L(50) = M + 30 \log f + 10 \log d + 30 \log \theta + L_N + L_C - G_t - G_r \quad \cdots (1)$$

This formula is a formula composed of at least the following: the atmospheric structure parameter M, the frequency f, the propagation loss $L_N$ (propagation loss Ln), the aerial line coupling loss Lc of the radio communication path, the transmission-side antenna gain Gt, and the reception-side antenna gain Gr. The atmospheric structure parameter M corresponds to the region of the radio communication path between the installation location of the transmission-side antenna and the installation location of the reception-side antenna. The frequency f is the frequency of the radio waves transmitted and received by the transmission-side antenna and the reception-side antenna. The radio wave propagation loss $L_N$ is the propagation loss of the radio waves in the tropospheric radio scattering space 5 along the radio communication path.

Other examples of propagation loss calculation formulas include Parl's method, M. Hirai's method, H. Staras' method, Hartman-Wilkerson's method, Booker-de Bettencourt's method, Collins' method, Rider's method, the ITU-R method, Yeh's method, the NBS method, and the like, and similarly, there are differences in the way the parameters that make up the formulas are calculated. For example, separate results can be obtained by calculating the aerial line coupling loss using each of the known formulas for calculating the aerial line coupling loss Lc of a radio communication path, such as Parl's method, M. Hirai's method, H. Staras' method, the ITU-R method, and the like.

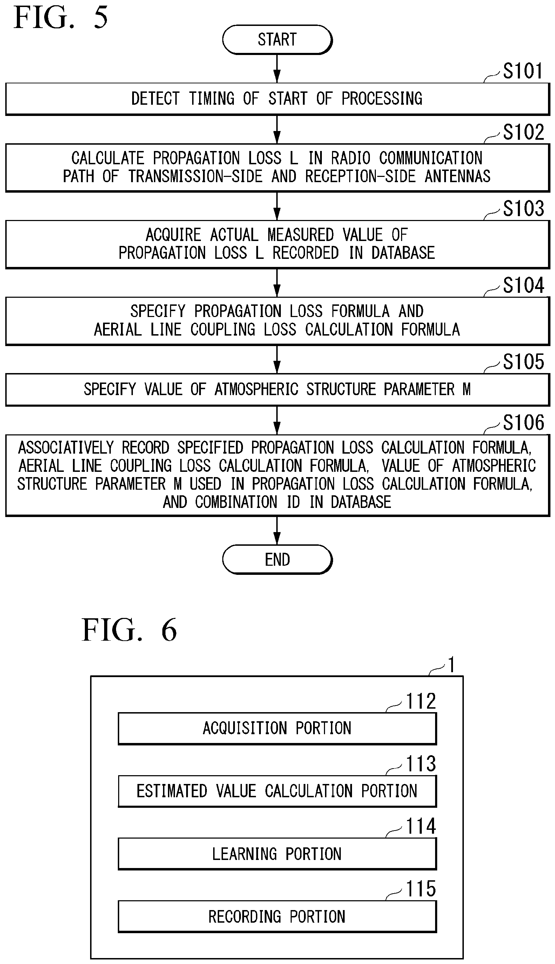

FIG. 5 is a diagram showing the processing flow of the line design assisting device.

The following is a description of the processing flow of the line design assisting device according to the example embodiment.

The line design assisting device 1 obtains each reception sensitivity level data from the radio control device 11 and the radio control device 21 over a predetermined period of time, such as one year, when the antenna 10 or antenna 20 is the reception-side antenna. The reception sensitivity level data may be the reception power value at the reception-side antenna. The acquisition portion 112 of the line design assisting device 1 calculates the average of the propagation loss L (50%) at each date and time over a long period of time, such as one year, based on the reception sensitivity level data and the output of the transmission-side antenna, etc., as the actual measured value and records it in the database 106. For each combination of a plurality of different transmission-side and reception-side antennas, the acquisition portion 112 records the actual measured value L (50%) of the propagation loss at each date and time for a predetermined period of time over a long period, such as one year, tied to a combination ID that indicates the combination.

The control portion 111 detects the timing of the start of processing (Step S101). The start of processing may be detected by the control portion 111 through the acquisition of a processing start instruction by the administrator's operation input, or by the control portion 111 based on a processing start instruction automatically acquired based on some program. This process start instruction may include a combination ID indicating the combination of the transmission-side and reception-side antennas. This processing start instruction may also include a line quality value indicating the probability of interruption in a given unit period as information for specifying the line quality. For example, if the probability of interruption is 50% for a unit period of one minute, information of 50% may be included as the line quality. If the probability of an uninterrupted one-minute unit period is 99.9%, then information of 99.9% may be included as the line quality. The control portion 111 outputs the instruction information including the combination ID and line quality value to the acquisition portion 112.

When the line quality is 50%, the acquisition portion 112 acquires from the database 106 a propagation loss calculation formula to calculate the propagation loss L (50%) and multiple aerial line coupling loss calculation formulas in order to calculate the aerial line coupling loss Lc, which is one of the parameters included in the propagation loss calculation formula. The acquisition portion 112 acquires the predefined atmospheric structure parameter M corresponding to the region of the radio communication path between the installation location of the transmission-side antenna and the installation location of the reception-side antenna indicated by the combination ID, the frequency f of the radio waves transmitted and received by the transmission-side antenna and the reception-side antenna in the past when the line quality is 50%, the propagation loss Ln of radio waves in the radio wave scattering space 5 in the troposphere in that radio communication path, the transmission-side antenna gain Gt, and the reception-side antenna gain Gr. This information may be recorded in the database 106 in advance. Alternatively these pieces of information may be values obtained by the line design assisting device 1 from the radio control device 11 or the radio control device 12. The acquisition portion 112 outputs those acquired pieces of information to the estimated value calculation portion 113.

The estimated value calculation portion 113 calculates the propagation loss L (50%) in the radio communication path of the transmission-side and reception-side antennas indicated by the combination ID using the information acquired from the acquisition portion 112 (Step S102). The estimated value calculation portion 113 calculates the aerial line coupling loss Lc using several different aerial line coupling loss calculation formulas, and calculates the propagation loss L (50%) corresponding to each aerial line coupling loss Lc.

Based on the combination ID, the learning portion 114 acquires the actual measured value of propagation loss L (50%), which is recorded in the database 106 in advance (Step S103). This actual measured value is the average of the propagation loss L (50%) at each date and time over a long period of time, such as one year. The learning portion 114 compares the acquired actual measured value of the propagation loss L (50%) with the multiple estimated propagation losses L (50%) calculated by the estimated value calculation portion 113 to specify the propagation loss calculation formula and the aerial line coupling loss calculation formula used to calculate the estimated propagation loss L (50%) closest to the actual measured value of propagation loss L (50%) (Step S104). The learning portion 114 also specifies the value of the atmospheric structure parameter M for the estimated propagation loss L (50%) to approach the actual measured value of propagation loss L (50%) based on the multiple relationships between the acquired actual measured value of the propagation loss L (50%) and the multiple estimated propagation losses L (50%) calculated by the estimated value calculation portion 113 (Step S105).

With regard to specification of the value of atmospheric structure parameter M, by comparing the estimated propagation loss L (50%) calculated by varying the atmospheric structure parameter M in turn with the actual measured value L (50%), the atmospheric structure parameter M that comes closest may be specified. Alternatively, the learning portion 114 may input the information acquired by the acquisition portion 112 into a specific model calculated in the past, and as the resulting output may specify the propagation loss calculation formula, aerial line coupling loss calculation formula, atmospheric structure parameter M and other parameters for calculating the propagation loss L of the radio communication path between the transmission-side antenna and reception-side antenna indicated by the combination ID. The specific model may be, for example, a specific model that calculates by machine learning the relationship between the combination of reference values of situation-specific parameters such as the location of previously used transmission-side antennas, location of reception-side antennas, topographic data between those antennas, atmospheric structure parameter M, and the value of situation-specific parameters such as the propagation loss calculation formula, the aerial line coupling loss calculation formula, and atmospheric structure parameter M used to calculate the estimated value approaching the actual measured value of the propagation loss L.

The processing start instruction may include a period of time that indicates a predetermined season. In this case, in the process described above, the control portion 111 may output to the acquisition portion 112 instruction information including information on the period indicating the season, the combination ID, and the line quality value. In this case, the acquisition portion 112 also acquires the actual measured value of the propagation loss L (50%) according to the period specified in the instruction information from the database 106 and outputs it to the learning portion 114. The learning portion 114 compares the actual measured value of the propagation loss L (50%) in a given season acquired from the acquisition portion 112 with the multiple estimated propagation losses L (50%) in that season calculated by the estimated value calculation portion 113, and specifies the propagation loss calculation formula and aerial line coupling loss calculation formula used for calculation of the estimated propagation loss L (50%) that is closest to the actual measured value of the propagation loss L (50%). The learning portion 114 also specifies via machine learning the value of the atmospheric structure parameter M for the estimated propagation loss L (50%) to approach the actual measured value of propagation loss L (50%) based on the multiple relationships between the actual measured value of the propagation loss L (50%) in a given season acquired by the acquisition portion 112 and the multiple estimated propagation losses L (50%) in that season calculated by the estimated value calculation portion 113.

The recording portion 115 associates the specified propagation loss calculation formula, the aerial line coupling loss calculation formula, the value of the atmospheric structure parameter M used in the propagation loss calculation formula, and the combination ID, and records them in the database 106 (Step S106). If a period of time indicating a predetermined season is included in the processing start instruction, the recording portion 115 may further record information on the seasonal period in the database 106 in association with those specified pieces of information.

Through the above process, the line design assisting device 1 can specify and record the propagation loss calculation formula, the aerial line coupling loss calculation formula, and the atmospheric structure parameter M used in the propagation loss calculation formula, which can calculate, with high accuracy values close to the actual measured values, the propagation loss L (50%) according to the combination of the transmission-side antenna and reception-side antenna. The line design assisting device 1 performs the same processing for each different transmission-side antenna and reception-side antenna combination, and for each combination of transmission-side and reception-side antennas, may record the propagation loss calculation formula, the aerial line coupling loss calculation formula, and the value of the atmospheric structure parameter M used in the propagation loss calculation formula, in association with the combination ID and the period of time indicating the season. The line design assisting device 1 can assist a user during line design or the like in easily specifying the propagation loss calculation formula, the aerial line coupling loss calculation formula, and the atmospheric structure parameter M used in the propagation loss calculation formula that can calculate, with high accuracy values close to the actual measured values, the propagation loss L (50%) according to the combination of the transmission-side antenna and reception-side antenna for each season or other predetermined period of time.

The design assisting portion 116 of the line design assisting device 1 acquires a design assistance request including information on combination ID and periods indicating seasons based on user operation of the management screen provided by the web server function of the line design assisting device 1, etc. In this case, the design assisting portion 116 acquires the propagation loss calculation formula, the aerial line coupling loss calculation formula, and the atmospheric structure parameter M used in the propagation loss calculation formula that are recorded in the database 106 in association with the combination ID or information on the period indicating the combination ID and the season, and presents them to a terminal or other device used by the user. This makes it easy for the user to ascertain the propagation loss calculation formula, the aerial line coupling loss calculation formula, and the atmospheric structure parameter M used in the propagation loss calculation formula in order to calculate the appropriate propagation loss L (50%) between the transmission-side and reception-side antennas indicated by the combination ID. The user can also easily ascertain the propagation loss calculation formula, the aerial line coupling loss calculation formula, and the atmospheric structure parameter M used in the propagation loss calculation formula in order to calculate the appropriate propagation loss L (50) for the season between the transmission-side and reception-side antennas indicated by the combination ID.

In the line design assisting device 1 described above, the learning portion 114 may similarly learn situation-specific parameters other than the atmospheric structure parameter M in order to calculate the combination of transmission-side and reception-side antennas and the propagation loss L with high accuracy for the period indicating the season. The atmospheric structure parameter M is another example of a situation-specific parameter.

In the above process, the recording portion 115 may record the specified propagation loss calculation formula, the aerial coupling loss calculation formula, the value of the atmospheric structure parameter M used in the propagation loss calculation equation in association with the topographic data acquired by the acquisition portion 112, and the combination ID in association with the terrain data obtained by the acquisition portion 112. In this case, the user, during line design, can easily ascertain the propagation loss calculation formula, the aerial line coupling loss calculation formula, and the atmospheric structure parameter M used in the propagation loss calculation formula for calculating the appropriate propagation loss L according to the terrain data.

The machine learning process by the learning portion 114 described above may use any known technique.

In the above processing, the acquisition portion 112 may acquire from the database 106 a propagation loss calculation formula to calculate the propagation loss L (99%) when the line quality information included in the instruction information to start processing is line quality 99%. Alternatively, when the line quality information included in the instruction information to start the process is line quality 99%, the acquisition portion 112 may acquire a propagation loss calculation formula that calculates the propagation loss L (50%) and the estimated value calculation portion 113, after calculating the propagation loss L (50%), may use the characteristic parameter fd of fading that can be specified according to the terrain data, radio wave refractive index No in the radio wave scattering space 5 of the radio communication path between the transmission-side antenna and reception-side antenna, and the like to calculate the propagation loss L (99%). For example, the propagation loss L (99%) is acquired by adding the characteristic parameter fd (99%) of fading to the propagation loss L (50%). The radio wave refractive index No in the radio wave scattering space 5 can be calculated using a known formula based on the absolute temperature T (°K), atmospheric pressure P (mb), saturated water vapor pressure es (mb), and relative humidity H (%) in the radio communication path between the transmission-side and reception-side antennas.

FIG. 6 is a diagram showing an example of the configuration of this line design assisting device according to the present example embodiment.

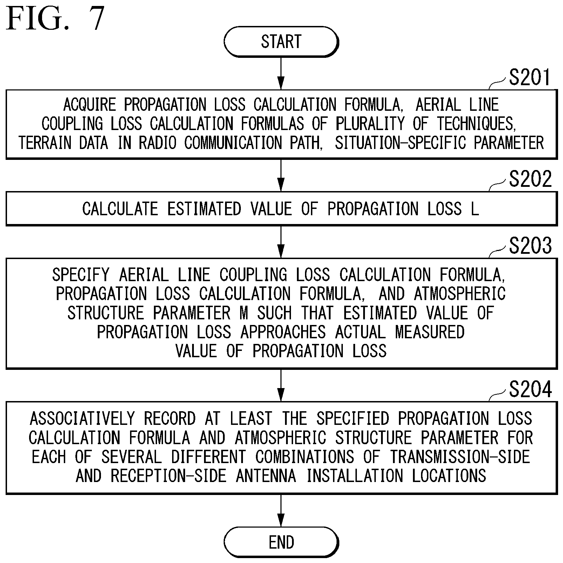

FIG. 7 is a diagram showing the processing flow by the line design assisting device shown in FIG. 6.

The line design assisting device 1 performs at least the functions of the acquisition portion 112, the estimated value calculation portion 113, the learning portion 114, and the recording portion 115.

The acquisition portion 112 acquires a propagation loss calculation formula that calculates the propagation loss L of the radio communication path using at least the atmospheric structure parameter M corresponding to the region of the radio communication path between the installation location of the transmission-side antenna and the installation location of the reception-side antenna, the frequency f of the radio waves transmitted and received by the transmission-side antenna and the reception-side antenna, the propagation loss Ln of radio waves in the radio wave scattering space 5 of the troposphere in that radio communication path, the aerial line coupling loss Lc of the radio communication path, the transmission-side antenna gain Gt, and the reception-side antenna gain Gr, aerial line coupling loss calculation formulas of a plurality of different techniques used for calculation of the aerial line coupling loss Lc, terrain data in the radio communication path, and situation-specific parameters used for at least one of the propagation loss calculation formula and the aerial line coupling loss calculation formulas (Step S201). The estimated value calculation portion 113 calculates the estimated value of the propagation loss L using the propagation loss calculation formula, the aerial line coupling loss formulas of multiple methods, and the situation-specific parameter (Step S202).

Based on the relationship between the actual measured value of propagation loss recorded based on the transmission and reception of radio waves between the transmission-side and reception-side antennas and the estimated value of the propagation loss L, the learning portion 114 uses machine learning to specify a propagation loss calculation formula using any of a plurality of aerial line coupling loss calculation formulas, to specify the atmospheric structure parameter M used in that propagation loss calculation formula, and to specify the characteristic parameter (fd) of fading such that the estimated value of the propagation loss L approaches the measured value of propagation loss (Step S203).

The recording portion 115 associates and records at least the propagation loss calculation formula and atmospheric structure parameter specified by the machine learning for each of several different combinations of transmission-side and reception-side antenna installation locations (Step S204).

Each of the above devices has a computer system inside. Each of the above-mentioned processes is stored in a computer-readable recording medium in the form of a program, and the computer reads and executes this program to perform the above-mentioned processes. Here, a computer-readable recording medium refers to magnetic disks, optical disks, CD-ROMs, DVD-ROMs, semiconductor memory, and the like. The computer program may also be delivered to a computer via a communication line, and the computer receiving this delivery may execute the program.

The above program may also be used to realize some of the aforementioned functions. Furthermore, the above program may be a so-called differential file (differential program), which can realize the aforementioned functions in combination with a program already recorded in the computer system.

Priority is claimed on Japanese Patent Application No. 2021-151196, filed September 16, 2021, the content of which is incorporated herein by reference.

Industrial Applicability

The present disclosure may be applied to a line design assisting device, a processing method, and recording medium.

Description of Reference Signs

    1 Line design assisting device
    10, 20 Antenna
    100 Radio communication system
    111 Control portion
    112 Acquisition portion
    113 Estimated value calculation portion
    114 Learning portion
    115 Recording portion
    116 Design assisting portion

**Claims**

1. A line design assisting device comprising:

an acquisition means that acquires a propagation loss calculation formula that calculates a propagation loss L of a radio communication path using at least an atmospheric structure parameter M corresponding to the region of the radio communication path between an installation location of the transmission-side antenna and the installation location of the reception-side antenna, a frequency f of the radio waves transmitted and received by the transmission-side antenna and the reception-side antenna, a propagation loss Ln of the radio waves in a radio wave scattering space of the troposphere in that radio communication path, an aerial line coupling loss Lc of the radio communication path, a transmission-side antenna gain Gt, and a reception-side antenna gain Gr, aerial line coupling loss calculation formulas of a plurality of different techniques used for calculation of the aerial line coupling loss Lc, terrain data in the radio communication path, and a situation-specific parameter used for at least one of the propagation loss calculation formula and the aerial line coupling loss calculation formulas;
an estimated value calculation means that calculates an estimated value of the propagation loss L using the propagation loss calculation formula, the aerial line coupling loss calculation formulas of a plurality of different techniques, and the situation-specific parameter;
a learning means that specifies the propagation loss calculation formula using any of the plurality of aerial line coupling loss calculation formulas, and specifies the atmospheric structure parameter M used in that propagation loss calculation formula such that the estimated value of the propagation loss L approaches the actual measured value of the propagation loss, on the basis of the relationship between the actual measured value of propagation loss recorded based on the transmission and reception of the radio waves between the transmission-side and reception-side antennas, and the estimated value of the propagation loss L; and
a recording means that records the propagation loss calculation formula and the atmospheric structure parameter specified by the learning means for each of a plurality of different combinations of the transmission-side antenna installation location and the reception-side antenna installation location.

2. The line design assisting device according to claim 1, wherein

the learning means, for each period that represents a given season, specifies the propagation loss calculation formula using any of the plurality of aerial line coupling loss calculation formulas, and specifies the atmospheric structure parameter M used in that propagation loss calculation formula such that the estimated value of the propagation loss L approaches the actual measured value of the propagation loss, on the basis of the relationship between the actual measured value of propagation loss recorded based on the transmission and reception of the radio waves between the transmission-side and reception-side antennas, and the estimated value of the propagation loss L; and
the recording means, for each period that represents a given season, records the propagation loss calculation formula and the atmospheric structure parameter specified by the learning means for each of a plurality of different combinations of the transmission-side antenna installation location and the reception-side antenna installation location.

3. The line design assisting device according to claim 1 or claim 2, wherein

the propagation loss calculation formula is a propagation loss calculation formula that calculates a predetermined statistical value of the propagation loss that varies over a long period of time;
the learning means specifies the propagation loss calculation formula and the atmospheric structure parameter M used in the propagation loss calculation formula in order to calculate the predetermined statistical value of the propagation loss; and
the learning means records the specification of the propagation loss calculation formula and the specification of the atmospheric structure parameter M used in the propagation loss calculation formula in order to calculate the predetermined statistical value of the propagation loss for each combination of the plurality of different installation locations of the transmission-side antenna and the reception-side antenna.

4. The line design assisting device according to any one of claims 1 to 3, wherein the learning means uses machine learning to specify the propagation loss calculation formula and to specify the atmospheric structure parameter M used in the propagation loss calculation formula.

5. A processing method comprising:

acquiring a propagation loss calculation formula that calculates a propagation loss L of a radio communication path using at least an atmospheric structure parameter M corresponding to the region of a radio communication path between an installation location of a transmission-side antenna and the installation location of a reception-side antenna, a frequency f of the radio waves transmitted and received by the transmission-side antenna and the reception-side antenna, a propagation loss Ln of the radio waves in a radio wave scattering space of the troposphere in that radio communication path, an aerial line coupling loss Lc of the radio communication path, a transmission-side antenna gain Gt, and a reception-side antenna gain Gr, aerial line coupling loss calculation formulas of a plurality of different techniques used for calculation of the aerial line coupling loss Lc, terrain data in the radio communication path, and a situation-specific parameter used for at least one of the propagation loss calculation formula and the aerial line coupling loss calculation formulas;

calculating an estimated value of the propagation loss L using the propagation loss calculation formula, the aerial line coupling loss calculation formulas of a plurality of different techniques, and the situation-specific parameter;

specifying the propagation loss calculation formula using any of the plurality of aerial line coupling loss calculation formulas, and specifying the atmospheric structure parameter M used in that propagation loss calculation formula such that the estimated value of the propagation loss L approaches the actual measured value of the propagation loss, on the basis of the relationship between the actual measured value of propagation loss recorded based on the transmission and reception of the radio waves between the transmission-side and reception-side antennas, and the estimated value of the propagation loss L; and

recording the propagation loss calculation formula and the atmospheric structure parameter specified in the machine learning for each of a plurality of different combinations of the transmission-side antenna installation location and the reception-side antenna installation location.

6. A recording medium that stores a program for causing a computer of a line design assisting device to execute:

acquiring a propagation loss calculation formula that calculates a propagation loss L of a radio communication path using at least an atmospheric structure parameter M corresponding to the region of a radio communication path between an installation location of a transmission-side antenna and the installation location of a reception-side antenna, a frequency f of the radio waves transmitted and received by the transmission-side antenna and the reception-side antenna, a propagation loss Ln of the radio waves in a radio wave scattering space of the troposphere in that radio communication path, an aerial line coupling loss Lc of the radio communication path, a transmission-side antenna gain Gt, and a reception-side antenna gain Gr, aerial line coupling loss calculation formulas of a plurality of different techniques used for calculation of the aerial line coupling loss Lc, terrain data in the radio communication path, and a situation-specific parameter used for at least one of the propagation loss calculation formula and the aerial line coupling loss calculation formulas;

calculating an estimated value of the propagation loss L using the propagation loss calculation formula, the aerial line coupling loss calculation formulas of a plurality of different techniques, and the situation-specific parameter;

specifying the propagation loss calculation formula using any of the plurality of aerial line coupling loss calculation formulas, and specifying the atmospheric structure parameter M used in that propagation loss calculation formula such that the estimated value of the propagation loss L approaches the actual measured value of the propagation loss, on the basis of the relationship between the actual measured value of propagation loss recorded based on the transmission and reception of the radio waves between the transmission-side and reception-side antennas, and the estimated value of the propagation loss L; and

recording the propagation loss calculation formula and the atmospheric structure parameter specified by the learning means for each of a plurality of different combinations of the transmission-side antenna installation location and the reception-side antenna installation location.

FIG. 1

# FIG. 2

```
                                                    ┌─1
┌─────────────────────────────────────────────────────────┐
│              LINE DESIGN ASSISTING DEVICE                │
│  101                                                     │
│  ┌──────────────────────┐        ┌─104                   │
│  │         CPU          │     ┌──────────────────────┐   │
│  └──────────────────────┘     │         HDD          │   │
│  102                          └──────────────────────┘   │
│  ┌──────────────────────┐        ┌─105                   │
│  │         ROM          │     ┌──────────────────────┐   │
│  └──────────────────────┘     │ COMMUNICATION MODULE │   │
│  103                          └──────────────────────┘   │
│  ┌──────────────────────┐        ┌─106                   │
│  │         RAM          │     ┌──────────────────────┐   │
│  └──────────────────────┘     │       DATABASE       │   │
│                               └──────────────────────┘   │
└─────────────────────────────────────────────────────────┘
```

# FIG. 3

```
                                         ┌─1
┌─────────────────────────────────────────────┐
│         LINE DESIGN ASSISTING DEVICE         │
│                              ┌─111           │
│  ┌─────────────────────────────────────┐     │
│  │           CONTROL PORTION           │     │
│  └─────────────────────────────────────┘     │
│                              ┌─112           │
│  ┌─────────────────────────────────────┐     │
│  │         ACQUISITION PORTION         │     │
│  └─────────────────────────────────────┘     │
│                              ┌─113           │
│  ┌─────────────────────────────────────┐     │
│  │  ESTIMATED VALUE CALCULATION PORTION │    │
│  └─────────────────────────────────────┘     │
│                              ┌─114           │
│  ┌─────────────────────────────────────┐     │
│  │          LEARNING PORTION           │     │
│  └─────────────────────────────────────┘     │
│                              ┌─115           │
│  ┌─────────────────────────────────────┐     │
│  │          RECORDING PORTION          │     │
│  └─────────────────────────────────────┘     │
│                              ┌─116           │
│  ┌─────────────────────────────────────┐     │
│  │       DESIGN ASSISTING PORTION      │     │
│  └─────────────────────────────────────┘     │
└─────────────────────────────────────────────┘
```

FIG. 4

S41

ACQUIRE PROPAGATION LOSS CALCULATION FORMULA,
MULTIPLE AERIAL LINE COUPLING LOSS CALCULATION FORMULAS,
TERRAIN DATA, SITUATION-SPECIFIC PARAMETER, AND THE LIKE

S42

CALCULATE ESTIMATED
VALUE OF PROPAGATION
LOSS L

S43

ACQUIRE ACTUAL MEASURED
VALUE OF PROPAGATION
LOSS L RECORDED
IN THE PAST

MACHINE LEARNING

S45

SPECIFY PROPAGATION LOSS CALCULATION FORMULA USING ANY AERIAL LINE
COUPLING LOSS CALCULATION FORMULA, AND SPECIFY ATMOSPHERIC STRUCTURE
PARAMETER M USED IN THAT PROPAGATION LOSS CALCULATION FORMULA

S46

RECORD SPECIFIED PROPAGATION LOSS CALCULATION FORMULA AND ATMOSPHERIC
STRUCTURE PARAMETER FOR EACH COMBINATION OF DIFFERENT TRANSMISSION-SIDE
AND RECEPTION-SIDE ANTENNA INSTALLATION LOCATIONS,
FOR EACH PERIOD THAT REPRESENTS A GIVEN SEASON

# FIG. 5

START

S101

DETECT TIMING OF START OF PROCESSING

S102

CALCULATE PROPAGATION LOSS L IN RADIO COMMUNICATION
PATH OF TRANSMISSION-SIDE AND RECEPTION-SIDE ANTENNAS

S103

ACQUIRE ACTUAL MEASURED VALUE OF
PROPAGATION LOSS L RECORDED IN DATABASE

S104

SPECIFY PROPAGATION LOSS FORMULA AND
AERIAL LINE COUPLING LOSS CALCULATION FORMULA

S105

SPECIFY VALUE OF ATMOSPHERIC STRUCTURE PARAMETER M

S106

ASSOCIATIVELY RECORD SPECIFIED PROPAGATION LOSS CALCULATION FORMULA,
AERIAL LINE COUPLING LOSS CALCULATION FORMULA, VALUE OF ATMOSPHERIC
STRUCTURE PARAMETER M USED IN PROPAGATION LOSS CALCULATION FORMULA,
AND COMBINATION ID IN DATABASE

END

# FIG. 6

1

112
ACQUISITION PORTION

113
ESTIMATED VALUE CALCULATION PORTION

114
LEARNING PORTION

115
RECORDING PORTION

# FIG. 7

```
                    ┌─────────────┐
                    │    START    │
                    └──────┬──────┘
                           │                        ╭─S201
   ┌───────────────────────▼────────────────────────────┐
   │   ACQUIRE PROPAGATION LOSS CALCULATION FORMULA, AERIAL LINE │
   │  COUPLING LOSS CALCULATION FORMULAS OF PLURALITY OF TECHNIQUES, │
   │ TERRAIN DATA IN RADIO COMMUNICATION PATH, SITUATION-SPECIFIC PARAMETER │
   └───────────────────────┬────────────────────────────┘
                           │                        ╭─S202
   ┌───────────────────────▼────────────────────────────┐
   │     CALCULATE ESTIMATED VALUE OF PROPAGATION LOSS L     │
   └───────────────────────┬────────────────────────────┘
                           │                        ╭─S203
   ┌───────────────────────▼────────────────────────────┐
   │    SPECIFY AERIAL LINE COUPLING LOSS CALCULATION FORMULA, │
   │   PROPAGATION LOSS CALCULATION FORMULA, AND ATMOSPHERIC │
   │    STRUCTURE PARAMETER M SUCH THAT ESTIMATED VALUE OF   │
   │      PROPAGATION LOSS APPROACHES ACTUAL MEASURED        │
   │              VALUE OF PROPAGATION LOSS                  │
   └───────────────────────┬────────────────────────────┘
                           │                        ╭─S204
   ┌───────────────────────▼────────────────────────────┐
   │  ASSOCIATIVELY RECORD AT LEAST THE SPECIFIED PROPAGATION LOSS │
   │  CALCULATION FORMULA AND ATMOSPHERIC STRUCTURE PARAMETER FOR │
   │  EACH OF SEVERAL DIFFERENT COMBINATIONS OF TRANSMISSION-SIDE │
   │     AND RECEPTION-SIDE ANTENNA INSTALLATION LOCATIONS    │
   └───────────────────────┬────────────────────────────┘
                           │
                    ┌──────▼──────┐
                    │     END     │
                    └─────────────┘
```

## INTERNATIONAL SEARCH REPORT

| | International application No. |
|---|---|
| | **PCT/JP2022/033583** |

**A. CLASSIFICATION OF SUBJECT MATTER**

*H04B 17/30*(2015.01)i; *H04W 16/18*(2009.01)i
FI: H04B17/30; H04W16/18

According to International Patent Classification (IPC) or to both national classification and IPC

**B. FIELDS SEARCHED**

Minimum documentation searched (classification system followed by classification symbols)

H04B17/30; H04W16/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2014-45285 A (KDDI CORP.) 13 March 2014 (2014-03-13)<br>entire text, all drawings | 1-6 |
| A | JP 2014-120990 A (NIPPON TELEGR. & TELEPH. CORP.) 30 June 2014 (2014-06-30)<br>entire text, all drawings | 1-6 |
| A | JP 2009-2921 A (MITSUBISHI ELECTRIC CORP.) 08 January 2009 (2009-01-08)<br>entire text, all drawings | 1-6 |
| A | US 2021/0183142 A1 (SAMSUNG ELECTRONICS CO., LTD.) 17 June 2021 (2021-06-17)<br>entire text, all drawings | 1-6 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**17**

**INTERNATIONAL SEARCH REPORT**
Information on patent family members

International application No.

**PCT/JP2022/033583**

| Patent document cited in search report | | | Publication date (day/month/year) | Patent family member(s) | Publication date (day/month/year) |
|---|---|---|---|---|---|
| JP | 2014-45285 | A | 13 March 2014 | (Family: none) | |
| JP | 2014-120990 | A | 30 June 2014 | (Family: none) | |
| JP | 2009-2921 | A | 08 January 2009 | (Family: none) | |
| US | 2021/0183142 | A1 | 17 June 2021 | WO 2021/125796 A1 entire text, all drawings KR 10-2021-0076440 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014045285 A

- JP 2021151196 A